# EUROPEAN PATENT APPLICATION

(11) **EP 4 202 775 A1**
(43) Date of publication of application: **28.06.2023**
(21) Application number: 21290102.9
(22) Date of filing: 27.12.2021
(51) Int. Cl.: G06N 3/063, G06N 3/08, G06N 3/04

(54) **DISTRIBUTED DATA PROCESSING SYSTEM AND METHOD**

(71) Applicant: GrAl Matter Labs S.A.S., 75012 Paris (FR)
(72) Inventor: Lindwer, Menno, 5656 AG Eindhoven (NL); Bamberg, Lennart, 5656 AG Eindhoven (NL)
(74) Representative: V.O.

(57) **Abstract**

A data processing system (1) is provided that comprises a first data processing device (10) and a second data processing device (20) coupled by a data communication channel (30). The first data processing device (10) comprises a data stream source (11), a first neural network processor (12) to execute a first sub-network (NN1) of a neural network (NN), and a first data communication channel interface (13). The second data processing device (20) comprises a second data communication channel interface (21) and a second neural network processor (22) to execute a second sub-network (NN2) of the neural network (NN). The first neural network processor (12) is configured to process a data stream (DS) received from the data stream source (11) and to provide a processed data stream (PDS) through the first data communication channel interface (13) to the data communication channel (30) and the second neural network processor (22) is configured to further process the processed data stream (PDS) received through the second data communication channel interface (21) from the data communication channel (30) and to provide a further processed data stream (FPDS). Therewith the neural network (NN) can be executed with a relatively modest computational load for the first data processing device (10), while offering a substantial reduction in data to be transmitted to the second data processing device (20).

## Description

### BACKGROUND

The present application pertains to a distributed data processing system.

The present application further pertains to a distributed data processing method.

Neural networks can be trained to perform complex data processing tasks. Therewith neural network processing is of ever increasing importance. Neural network processing however involves a substantial computational burden, which is due to the fact that an essential operation in such networks is the computation of output value as a weighted sum of a plurality of input values. This necessitates that each input value is multiplied with a respective weight. In particular for data processing tasks, as machine vision applications that need to process a continuous stream of image frames which may comprise thousands to millions of pixels this requires a substantial processing capacity which is not always available at the location of the application. Typical requirements for practical applications are that the network has a substantial number of neural network layers, for example over 100 layers, in order to have a substantial capacity for being trained to complex tasks. Data processing tasks may also require that a neural network is capable to handle a substantial amount of input data. For example applications in a machine vision system may require that the neural network is capable to accept relatively large input frame sizes (for example, HD). Moreover for machine vision systems designed for action recognition the neural network needs to be capable to receive the image data as a stream of frames, and to be capable to detect features in the time domain. Neural networks in such applications may have complex network topologies involving for example multiple inputs (e.g. from different surveillance camera's), forks, joins, and multiple outputs (e.g. to output specific output data for specific system users).

To enable local machine vision applications, e.g. for shop surveillance, while avoiding that this requires substantial computational resources, it may be contemplated to transmit the locally captured raw video data to a remote server where the neural network that performs the machine vision task is implemented. This however requires a substantial data transmission capacity. Data compression algorithms are available that enable a reduction of data transfer requirements but have the disadvantage that image information is lost that may be relevant for the machine vision task.

### SUMMARY

It is a first object to provide an improved distributed data processing system with modest data transfer requirements without impeding functionality of the machine vision task.

It is a second object to provide an improved distributed data processing method with modest data transfer requirements without impeding functionality of the machine vision task.

In accordance with the first object, the improved distributed data processing system comprises a first data processing device and a second data processing device coupled by a data communication channel. The first data processing device is typically installed at a location to be monitored, such as a shop, a street, a manufacturing system, a warehouse.

The first data processing device comprises a data stream source, such as a video camera and/or a microphone. In another application the data stream source may be configured as a set of one or more process data sensors in a manufacturing system. In again another application the data stream source may be configured as a set of one or more temperature sensors to measure temperatures at various positions within a warehouse. The first data processing device further comprises a first neural network processor to execute a first sub-network of a neural network, and a first data communication channel interface. The first neural network processor is configured to process a data stream received from the data stream source and to provide a processed data stream through the first data communication channel interface to the data communication channel. The data communication channel may be a private resource, but may alternatively a public resource for example the internet.

The second data processing device, for example a remote server, comprises a second data exchange network interface and a second neural network processor to execute a second sub-network of the neural network. In operation the second data processing device receives the processed data stream through the second data communication channel interface from the data communication channel.

In this manner the first data processing device and the second data processing device, remote from the first data processing device, together implement a neural network, that processes a data stream received from the data stream source to render the further processed data stream.

The neural network composed of the sub-networks is trained as a whole. The network parameters can only be computed for the entire network, and not for a part of the network in isolation. This holds for both supervised and unsupervised training. The need to apply end-to-end training is what defines the boundaries of a neural network. The trained network is then portioned into two or more sub-networks that each are assigned respective neural processor in a respective data processing device and use a communication means to exchange their data. Therewith the topology of the network remains the same despite the fact that two or more sub-networks are provided remote from each other. The two or more sub-networks may be arranged topologically as a chain, wherein a sub-network provides a processed data stream to a successor. Alternatively the two or more sub-networks may be arranged according to a more complex topology in the neural network. For example a sub-network may provide a stream of processed data to two or more other sub-networks and/or a sub-network may receive a stream of input data from two or more other sub-networks.

Although it is necessary to train the network as a whole, it may well be advantageous to train a connected part of a larger neural network, (a sub-network) in isolation, and thus establish an initial set of parameters (feature maps). For the network as a whole to work effectively (perform its function), optimally (at a sufficient quality), and efficiently (in terms of throughput, power consumption), it will still be important to improve on those parameters (of the subnetwork) by further training the network as a whole. In this sense, so-called pre-training of a subnetwork can be seen as a part of a method to improve the efficiency of the end-to-end training. Similarly, transfer-learning applied to a sub-network, can be part of the end-to-end training a neural network for a particular application.

Due to the fact that the first data processing device only needs to execute a first sub-network, the processing capacity required for the first neural network processor can be modest. The processed output data of the first sub-network executed by the first data processing device can be transmitted with a substantially lower data rate as compared to the data rate that would be required for the raw stream of data received from the data stream source. In typical applications, the data rate may be reduced by a factor of 10 to 100. In the improved distributed data processing system, a communication channel is used to transmit the data from a first intermediate layer in the neural network, i.e. the last layer in the first sub-network in the first data processing device to a subsequent intermediate layer, i.e. the first layer in the second sub-network in the second processing device remote from the first processing device. This does not affect the topology of the network chain designed for the data processing task. Therewith the data rate reduction is achieved without impeding the operation of the neural network designed for the data processing task.

In an embodiment the first data processing device contributes at most 30% to the total computational load involved in the execution of the neural network and the first sub-network is configured to output a processed data stream having a data volume of at most 30% of the data volume of the data stream provided by the data stream source.

Nevertheless, depending on the circumstances other requirements may prevail in which a neural network may have a different distribution of computational load and reduction in the data volume of the data stream. For example in some embodiments a less substantial reduction in the data volume may be acceptable if it is desired that neural stages that would otherwise be part of a first data processing device should reside in a second data processing device, such as a server. For example this can be the case because those neural network stages, e.g. serving to detect higher-level (action) features are proprietary and need to remain confidential. This may also be the case if a frequent adaptation of these stages is necessary for example in a continuously evolving environment. Therewith it is avoided that end-users, having the first data-processing device, need to be bothered when adaptations are necessary.

Reversely, in some embodiments a higher computational load of the first data processing device may be acceptable selected if it is desired that neural stages that would otherwise be part of a second data processing device should reside in a first data processing device, such as a mobile phone. This can be the case for example if a stronger data reduction is desirable to further hide privacy sensitive data that is used as input for the neural network. Also it is conceivable that a manufacturer of a mobile phone wishes to keep confidential information about the neural stages that would otherwise be part of a second data processing device

The neural network implemented by the system can be either a generally known network, such as a version of MobileNet, or a custom network. In some examples of a custom network, the second sub-network can be kept confidential. The architecture of the first sub-network may also be kept confidential. Therewith it is also achieved that data that is transmitted is kept confidential without requiring an additional encryption step. Alternatively, the architecture of the first sub-network may be published, so as to facilitate standardization. In any case an (additional) encryption/decryption step may be applied for data protection.

In an embodiment of the data processing system the second sub-network is configured to merge a plurality of processed data streams of respective first data processing devices so as to generate a single further processed data stream. In an example thereof, the first data processing devices comprise cameras, for example installed in a shop or a street, and the first sub-network merges the plurality of processed data streams generated from the camera outputs.

As becomes apparent from the above, a major application of the improved data processing system as provided herein is processing image data. Typically the data stream source generates the image data as a stream of image frames. Each image frame comprises image data in a predetermined format, for example a set of one or more image channel values for each element in a 2-dimensional or 3-dimensional matrix. The set of one or more image channel values per element may consist of a single value, e.g. a grey value or a depth value, or may comprise a plurality of channel values, e.g. color channel values. The first neural network processor of the first data processing device is configured to process the data stream (DS) comprising a sequence of image frames, and to generate a stream comprising a sequence of feature map frames at its output. A feature map frame comprises feature map data in a predetermined format, typically in the form of a set of one or more feature channel values for each element in a 2-dimensional or 3-dimensional matrix. It is noted that an image may be considered as a particular type of feature map and an image frame as a particular type of feature map frame. The feature map frames in the sequence of feature map frames need not correspond one to one to respective ones of the stream of image frames. This may be the case if the computation by the first neural network processor is only based on spatial operations. However, it may alternatively be the case that the first neural network processor is configured to perform computations that are dependent on temporal relationships in the stream of image frames, so that the content of a feature map as specified in a feature map frame is dependent on a plurality of image frames. As noted above, feature maps further stream downwards in the neural network tend to have a lower data content. I.e. the product of the number of feature map elements and the number of feature map channels tends to decrease in a direction towards the output of the neural network. In an embodiment the first neural network processor of the first data processing device is further configured to perform a temporal compression by transmitting information about a feature map value of a feature map element of a feature map frame only if an absolute difference between that feature map value and a feature map value of that feature map element in a previous feature map frame exceeds a specified threshold value.

In an embodiment of the data processing system the first sub-network is configured to receive as the data stream successive static images and to render as the processed data stream corresponding successive feature maps of said successive static images. The second sub-network comprises one or more LSTM layers, and is configured to detect information about dynamic features in the processed data stream with successive feature maps and to supply the detected information in the further processed data stream. The first sub-network is for example the backbone of a neural network known as AlexNet or GoogleNet. The wording backbone indicates that one or more layers at the output side of the network, such as a soft-max layer, may be omitted. Examples of a neural network comprising the first sub-network and the second sub-network are described by Ng et al, in "Beyond Short Snippets: Deep Networks for Video Classification", arXiv: 1503.08909v2, 13 Apr. 2015. Ng et al however do not suggest to implement the neural network in a system as disclosed herein, wherein the first data processing device comprises a first neural network processor that executes the first sub-network, and transfers the processed data stream to the second data processing device, remote from the first data processing device, via a data communication channel, wherein the neural network processor of the second data processing device subsequently executes the second sub-network.

The processed data stream comprises the feature data extracted from the input stream of successive static images and therewith can be transmitted over the data communication channel with a substantially lower bitrate than would have been the case when the successive static images were transmitted as such. Only part of the computations involved in executing the neural network needs to take place at the side of the first data processing device. This very favorable in case the first data processing device is a mobile device. Due to the fact that extracted feature data are transmitted rather than original image data, it is easier to avoid that third parties get access to privacy sensitive image data. Either the to privacy sensitive data in the image is no longer represented in the processed data stream, or it is more difficult to reconstruct. In some examples of this embodiment, the first data processing device is one of a plurality of first data processing devices and each first data processing device of the plurality of first data processing devices is configured to render an input stream of successive static images from its own point of view, and to render as the processed data stream corresponding successive feature maps of said successive static images. The second data processing device is configured to receive and fuse the processed data streams from the plurality of first data processing devices and to detect information about dynamic features in the resulting fused processed data stream. In a synchronous version of this embodiment the previous feature map frame is the immediately preceding feature map frame. In an asynchronous version the previous feature map frame is the most recent feature map frame for which information was transmitted for said feature map element. In preferred examples thereof the transmitted information specifies the change in value of the feature map element. Generally this can be encoded with a substantially smaller amount of bits than the absolute value.

In an embodiment of the data processing system the first data processing device comprises a video processing device that generates a first stream of I-frames and a second stream of P frames. The first stream of I-frames is processed by a first sub-network neural network comprising a first sub-network executed by the first data processing device and a second sub-network executed by the second data processing device to extract still scene information. The second stream of P-frames is processed by a second sub-network neural network comprising a first sub-network executed by the first data processing device and a second sub-network executed by the second data processing device to extract spatio-temporal modeling information. The first data processing device may either have respective neural network processors to execute the first sub-network of the first neural network chain and the first sub-network of the second neural network chain or may have a common neural network processor for executing both first sub-networks. Likewise, the second data processing device may either have respective neural network processors to execute the second sub-network of the first neural network chain and the second sub-network of the second neural network chain or may have a common neural network processor for executing both second sub-networks.

In an embodiment of the data processing system the second data processing device comprises a further data communication channel interface to provide the further processed data stream to a further data communication channel and the data processing system comprises a third data processing device. The third data processing device has a third data communication channel interface and a third neural network processor to execute a third sub-network of the neural network, and the third neural network processor is configured to further process the further processed data stream received through the third data communication channel interface from the further data communication channel and to provide a still further processed data stream. In an example of this embodiment the first data processing device is a mobile device, the second data processing device is a local server, and the third data processing device is a remote server. In another example of this embodiment the first data processing device is a mobile device, the second data processing device is a remote server, and the third data processing device is a client device. In an example client device also provides the stream of input data, but it may alternatively be another client device, e.g. a mobile device. The third data processing device can for example be a client device that performs the final neural network of the implemented neural network, to retrieve client specific data.

Whereas in practice the data processing system may have a neural network comprising two or three neural networks to be executed in respective data processing devices as described in the examples above, the present disclosure is not limited to these examples. A neural network comprising a larger number of neural networks to be executed in respective data processing devices is also possible. It may further be contemplated that for some applications a neural network has more than one recipient neural networks that apply a respective further processing, or that a neural network has more than one source neural network from which it receives input data. In the latter case it computes a combined output stream for the plurality of input streams. Not every data processing device in the data processing system necessarily has a neural network processor. In some embodiments, one or more data processing devices have a facilitating function, like displaying information, routing information and the like.

In an embodiment the second data processing device is configured to issue a data stream request signal upon detecting a predetermined event in the further processed data stream, and the first data processing device upon receiving the data stream request signal is configured to further transmit data from the data stream to the second data processing device in addition to the processed data stream. This embodiment is for example applicable for surveillance purposes, wherein the data stream is an image data stream, and wherein the neural network is configured to detect predetermined types of events like a shoplifting event or a violence event. Upon detection of an event of a predetermined type, the second data processing device issues the data stream request signal, in response to which the first data processing device starts transmitting the data stream in its entirety or in a decodable format, so that it is also possible to identify persons represented in the data stream by an operator of the second data processing device. Although this temporarily causes an increase in the amount of data to be transferred, the amount of data that is to be transmitted on average still is modest, because in the absence of a detected event the data stream itself or its decodable version needs not to be transmitted.

Unavoidably, a delay is present between the point in time a predetermined event starts to occur and the point in time that the first data processing device starts receives the data stream request signal and starts transmitting the data stream or its decodable version. It may sometimes be the case that insufficient information about the event is received. In an advantageous variation of this embodiment, the first data processing device comprises a data stream buffer to buffer a most recent portion of the data stream. Upon receiving the data stream request signal the first data processing device is configured to further transmit data from the most recent portion of the data stream in addition to the processed data stream. Therewith it can be guaranteed that second data processing device receives the data stream or its decodable version over a period of time including the start of the predetermined event that enables an operator to properly identify the persons involved and to provide a proper analysis of the details of the event.

The present disclosure further provides a data processing method comprising:
generating a stream of data with a data stream source in a first data processing device;
executing a first sub-network of a neural network with a first neural network processor of the first data processing device to process the data stream from the data stream source and to provide a processed data stream;
transmitting the processed data stream via a data communication channel to a second data processing device;
executing a second sub-network of the neural network with a second neural network processor of the second data processing device to further process the processed data stream and to provide a further processed data stream.

### BRIEF DESCRIPTION OF THE DRAWINGS

These and other aspects are disclosed in more detail with reference to the drawings. Therein:
FIG. 1 shows an embodiment of the improved data processing system;
FIG. 2 shows in more detail an exemplary neural network implemented by the data processing system (1) ;
FIGs. 3A, 3B, 3C show various metrics for mutually subsequent stages in the neural network;
FIG. 4 shows in more detail another exemplary neural network implemented by the data processing system (1) ;
FIGs. 5A, 5B, 5C show various metrics for mutually subsequent stages in the neural network;
FIG. 6 shows a further embodiment of the improved data processing system;
FIG. 7 shows a still further embodiment of the improved data processing system;
FIG. 8 shows again a still further embodiment of the improved data processing system.

### DETAILED DESCRIPTION OF EMBODIMENTS

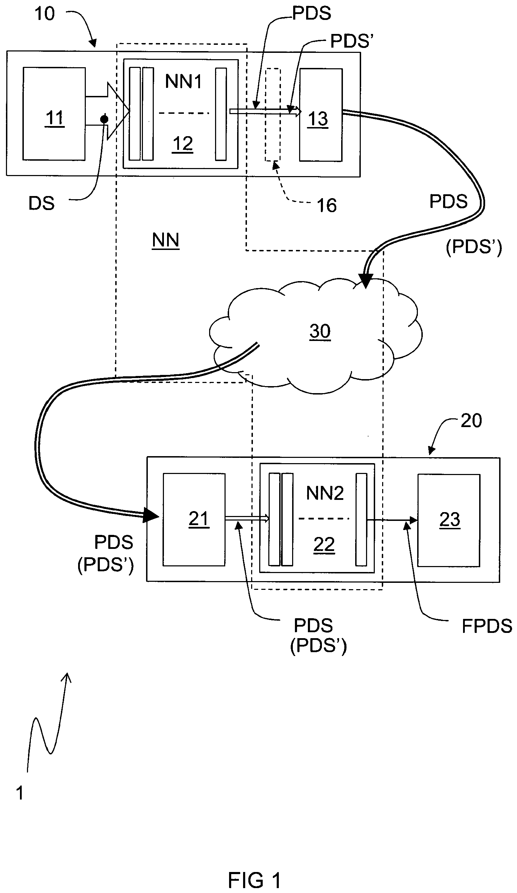

FIG. 1 schematically shows a data processing system 1 that comprises a first data processing device 10 and a second data processing device 20 coupled by a data communication channel 30. The first data processing device 10, for example a mobile device, such as a cell phone, comprises a data stream source 11, a first neural network processor 12 to execute a first sub-network NN1 of a neural network NN, and a first data communication channel interface 13. The second data processing device 20, which may have high data processing capabilities, such as a server, comprises a second data communication channel interface 21 and a second neural network processor 22 to execute a second sub-network NN2 of the neural network NN. The first neural network processor 12 is configured to process a data stream DS received from the data stream source 11 and to provide a processed data stream PDS through the first data communication channel interface 13 to the data communication channel 30. The second neural network processor 22 is configured to further process the processed data stream PDS received through the second data communication channel interface 21 from the data communication channel 30 and to provide a further processed data stream FPDS.

In the example shown the communication channel 30 is a public channel, such as intranet. Alternatively another channel, e.g. a private network or a dedicated connection may be used for this purpose.

In an example, the data stream source 11 is a camera, that renders a stream of image frames comprising a set of pixels or voxels. The image data comprised in a pixel may be a scalar, e.g. a gray value or depth or a vector, e.g. a vector comprising respective values for respective image channels, e.g. color channels and optionally a depth channel. The first sub-network NN1 and the second sub-network NN2 operate together as a single neural network NN, to provide the further processed data stream FPDS. The further processed data stream FPDS may comprise detection results, such as suspect actions in a shop or in a public location.

Per frame, the total amount of data to be transmitted from the output of the first sub-network NN1 of the neural network NN to the input of the second sub-network NN2 of the neural network is equal to the product of the number of pixels and the number of channels of the feature map to be transmitted.

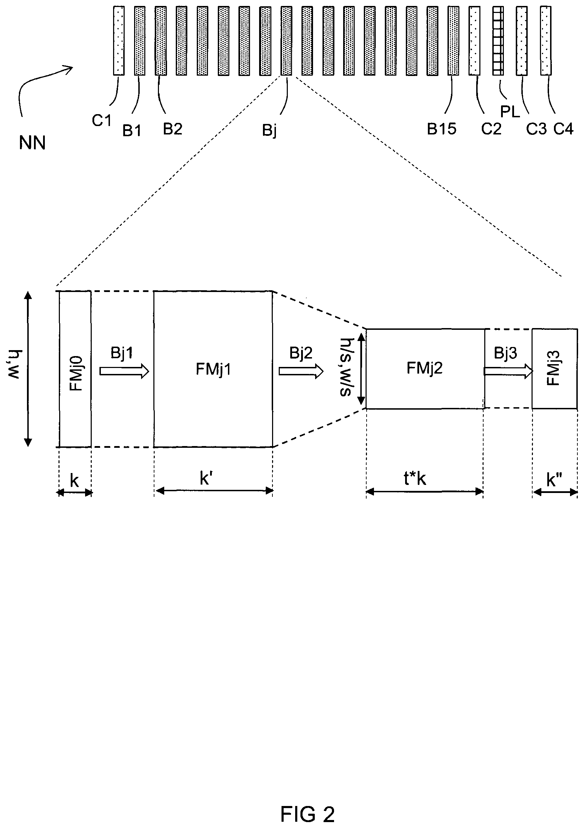

The invention is now presented in more detail with reference to the neural network denoted as MobileNet V3 large, which is specified in detail in the article "Searching for MobileNetV3" by Howard et al, in arXiv: 1905.02244v5, dated 20 Nov 2019. The architecture of this network is schematically depicted in FIG. 2. As shown in FIG. 2, the MobileNetV3-Large comprises an initial conv2d layer C1, having kernel size 3x3, a stride 2 and an output with 16 channels. The initial layer C1 is followed by 15 bottleneck blocks, a further convolutional layer C2, a pooling layer PL and two final convolutional layers C3, C4.

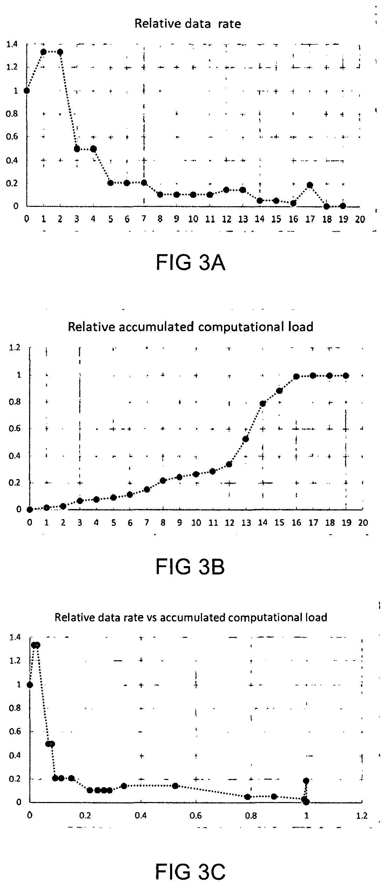

As noted, the data stream volume per image frame is equal to the product of the number of pixels and the number of channels of the feature map. The first column of Table 1 of the cited publication specifies the dimensions of the input feature map of each layer or block. FIG. 3A schematically shows the relative data rate. The relative data rate for each stage is the data content of the output feature map of the stage divided by the data content of the input feature map obtained from the data stream source 11. The data content of a feature map is the product of the number of pixels and the number of channels.

In this example the absolute size of the input feature map (at stage 0) is 224×224 pixels × 3 channels. The output feature map of the penultimate stage (stage 19) is 1×1 pixel × 1280 channels. The final stage computes k output channels, the value of k depending on the particular application.

It can be seen that after an initial increase, the relative data rate steeply decreases until a value of about 0.2 at the output of the 5^{th} stage. A still further decrease is achieved for example at the input of stage 8, but at the cost of relatively large computational efforts

FIG. 3B shows the relative accumulated computational load, i.e. the total computational load for each frame to perform the computations for the stages 1 to N.

To estimate the computational load involved in executing the neural network, the architecture thereof needs to be examined in more detail. As shown in Table 1 of the cited document, the MobileNetV3-Large comprises an initial conv2d layer having kernel size 3x3, a stride 2 and an output with 16 channels.

This initial layer C1 computes each of the output channel values of each of the channels of each of the pixels in its output feature map as a weighted sum of the channel values of the input feature map within the range of the convolution kernel around the corresponding position in the input feature map. This involves 27 multiplications per output pixel per output channel. The computation costs for performing the multiplications dominate the total computational effort.

Each of the bottleneck blocks is composed of three computational layers

One block Bj is shown in more detail in the lower part of FIG. 2. As shown therein, the input of a bottleneck block Bj is a feature map FMj0 of size h × w × k, wherein h and w are the height and the width of the feature map and k is the number of channels. A first layer Bj1 of the bottleneck block Bj performs a 1×1 convolution operation followed by a non-linear operation to the feature map FMj0. The 1×1 convolution operation computes for each lateral position in a first intermediate feature map FMj1 for each of k' intermediate channels a weighted sum of the values in the k channels in the corresponding lateral position in the feature map FMj0. This results in an expanded, first intermediate feature map FMj1 having the same lateral dimensions as the feature map FMj0, but having a number of channels equal to k', that is typically larger than the number k of input channels. A second layer Bj2 of the bottleneck block Bj performs a depthwise convolution, also followed by a non-linear operation. The depthwise convolution is a convolution in the spatial directions, e.g. a 3x3 convolution which is performed independently for each of the k' channels. Therewith the lateral dimensions may be reduced by a stride s, so that the second intermediate feature map FMj2 has reduced lateral dimensions h/s, w/s and the same number of channels. Alternatively the lateral dimensions of the second intermediate feature map FMj2 may be the same as those of the first intermediate feature map FMj1, i.e. s=1. A third layer Bj3 of the bottleneck block Bj performs a 1×1 convolution operation, without being followed by a non-linear operation, in which an output feature map FMj3 is obtained that has the same lateral dimensions as the second intermediate feature map FMj2 and that has a number of channels k" that is typically larger than k, but smaller than k'.

The computational load involved in executing the first layer Bj1 of the block Bj is estimated as follows. The computational load of each value for each output channel of the k' output channels of each pixel of each of the output pixels is approximately the computational load needed for the multiplications for computing the weighted sum over the k input channel values for the corresponding input pixel. Hence the total computational load of the layer Bj1 is approximately w*h*k*k'.

The computational load involved in executing the second layer Bj2 is estimated as follows. The computational load for computing each value for each channel in each pixel in the output feature map of this block involves K multiplications for computing the weighted sum over the channel values within the convolution kernel mapped at the corresponding position in the input feature map. The value K is the number of (non-zero) elements in the convolution kernel, e.g. K = 9 for a 3×3 kernel with having no zero elements, and K = 25 for a 5×5 kernel having no zero elements. Taking into account that the size of the output feature map is h/s × w/s, wherein s is the stride the total computational load is K*(h/s)*(w/s)*k'.

As noted, the third layer Bj3 of the bottleneck block Bj performs a 1×1 convolution operation, without being followed by a non-linear operation, in which an output feature map FMj3 is obtained that has the same lateral dimensions as the second intermediate feature map FMj2 and that has a number of channels k" that is typically larger than k, but smaller than k'. The computation of the third layer Bj3 of the bottleneck block Bj can be combined with the computation of the first layer B(j+1)1 of the next bottleneck block Bj+1. However, it should be taken into account that the total computational load of the layer B(j+1)1 is approximately w*h*k"*k2'. Therein k2' is the number of 'intermediary channels' at the output of the layer B(j+1)1 I.e. the number of input channels to be processed by the bottleneck block Bj+1 is k" instead of k.

Finally, the computational load involved in the conv2d stages following the bottleneck blocks is approximately: w*h*k*k". The computational load of the pooling stage is considered to negligible. Based on these assumptions, FIG. 3B shows the fraction of the computational load required for computing stages 1 to N relative to the total computational load.

FIG. 3C shows the relative data rate that is achieved as a function of the fraction of the accumulated computational load.

In an embodiment, the first sub-network NN1 of a neural network NN that is to be executed by the first neural network processor 12 comprises stages 1 to 8 of the MobileNetV3 network, and the second sub-network NN2 that is to be executed by the second neural network processor 22 comprises the remaining stages 9 to 21. As can be seen in FIG. 3A, 3B and 3C, therewith the data stream is reduced to about 1/10^{th} of the volume of the original data stream as provided by the data stream source 11 with about 1/5^{th} of the total computational load. Variations are possible, depending on processing capacity and data channel capacity. For example, if limitations to the processing capacity are dominant the first sub-network NN1 of a neural network NN may comprise stages 1 to 5 of the MobileNetV3 network, and the second sub-network NN2 may comprise the remaining stages. Therewith a further reduction in processing capacity requirements is achieved, while the reduction of the data stream volume is still about to 1/5^{th} of the input data stream. If data channel capacity forms a bottleneck, an embodiment may be selected wherein the first sub-network NN1 of a neural network NN comprises stages 1 to 14 of the MobileNetV3 network, and the second sub-network NN2 may comprise the remaining stages. Therewith the data stream is reduced to about 1/20^{th} of the volume of the original data stream.

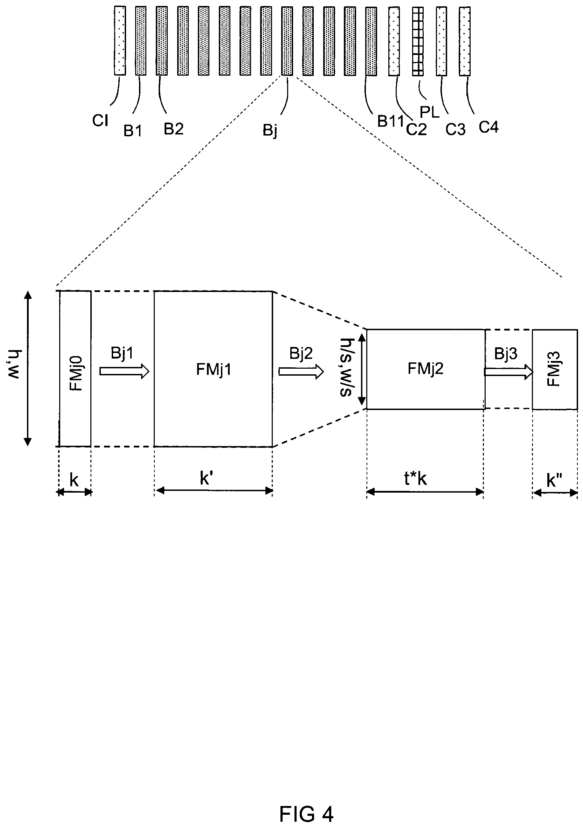

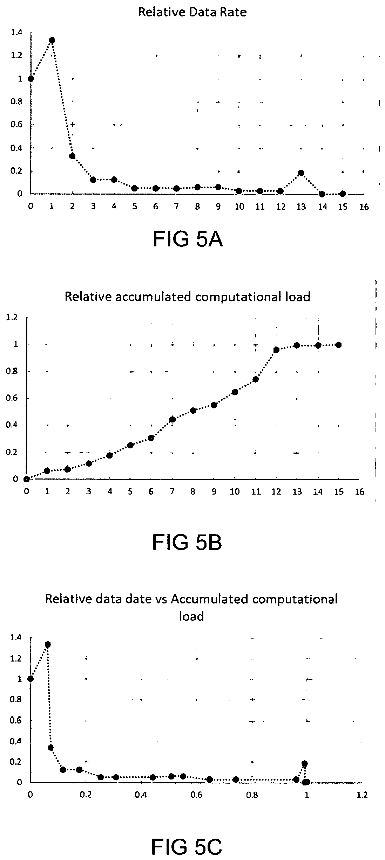

In another example the neural network NN is MobileNet V3 small, which is illustrated in FIG. 4. This neural network NN has a similar architecture, but the number of bottleneck blocks is less, i.e. 11 instead of 15. FIG. 5A shows the relative metrics of the output feature maps and FIG. 5B shows the relative accumulated computational load involved in the computation of the 1^{st} to the N^{th} stage. As shown in FIGs. 5A, 5B and 5C, also in this case it is possible to achieve a significant reduction in data processing capacity requirements for the first neural network processor 12 of the first data processing device 10 in combination with a reduction of data channel capacity requirements for the data communication channel 30. For example, in an embodiment wherein the first data processing device 10 performs the first five stages of the MobileNet V3 small. Therewith the volume of the data stream is reduced to about 1/20^{th} of the input data stream whereas the first neural network processor 12 only needs to contribute one quarter to the total computational load. In another example the first data processing device 10 performs the first three stages therewith achieving a data stream reduction to about 1/8^{th} of the input data stream with about 1/6^{th} of the total computational load.

Returning again to FIG. 1, it is noted that in some embodiments the first data processing device further comprises a temporal compression module 16. The temporal compression module 16 performs a temporal compression by transmitting information about a feature map value of a feature map element of a feature map frame generated at the output of the first neural network processor 12 only if an absolute difference between that feature map value and a feature map value of that feature map element in a previous feature map frame exceeds a specified threshold value. In some examples of these embodiments the previous feature map frame is the immediately preceding feature map frame. In other examples the previous feature map frame is the most recent feature map frame for which information was transmitted for said feature map element. A very efficient compression is achieved in an exemplary embodiment wherein the transmitted information specifies the change in value of said feature map element.

It is noted that in the examples presented above, the dimensions of the input video frame are as small as 224x224. For high-definition (HD) inputs, a significantly higher data compression, e.g. exceeding a 100 fold compression can be achieved with a few neural network stages.

It is further noted that the use of the ReLU activation function also contributes to an activation sparsity. In the considered network, even ReLU6 activation is applied. Thus, all values are bound in the range from 0 to 6. Such a non-uniform distribution will increase the gains of an entropy-encoding on the values.

In another embodiment of the system of FIG. 1, the first sub-network NN1 of the neural network NN is configured to receive as the data stream DS successive static images and to render as the processed data stream PDS corresponding successive feature maps of said successive static images. The second sub-network NN2 of the neural network NN comprises one or more LSTM layers. The second sub-network NN2 is configured to detect information about dynamic features in the processed data stream PDS with successive feature maps and to supply the detected information in the further processed data stream FPDS.

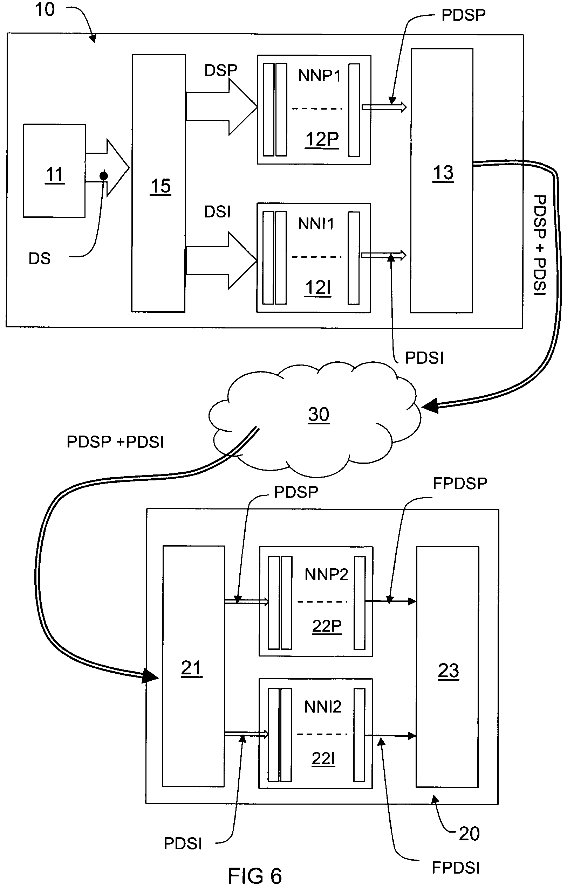

FIG. 6 shows an alternative embodiment of the system. Therein the first data processing device 10 comprises a video processing device 15 that generates a first stream DSI of I-frames and a second stream DSP of P frames. The first stream DSI of I-frames is processed by a first neural network comprising a first sub-network NNI1 executed by the first data processing device 10 and a second sub-network NNI2 executed by the second data processing device 20 to extract still scene information FPDSI. The second stream DSP of P-frames is processed by a second neural network comprising a first sub-network NNP1 executed by the first data processing device 10 and a second sub-network NNP2 executed by the second data processing device 20 to extract spatio-temporal modeling information FPDSP. In the embodiment shown a first processed stream PDSI is computed by the first sub-network NNI1 of the first neural network in response to the first stream DSI of I-frames. A second processed stream PDSP is computed by the first sub-network NNP1 of the second neural network in response to the second stream DSP of P-frames.

The first data communication channel interface 13 provides a combined stream PDSP+PDSI to the data communication channel 30 and the second data communication channel interface 21 splits the combined stream PDSP+PDSI of processed data into a first stream PDSI to be further processed by the second sub-network NNI2 of the first neural network. The further processed first data stream FPDSI and the further processed second data stream FPDSP are provided to an application 23, for example a monitoring station.

In the embodiment shown, the first data processing device 10 comprises separate neural network processors 12I and 12P for executing the first sub-network NNI1 of the first neural network chain and executing the first sub-network NNP1 of the second neural network chain. Alternatively the first data processing device 10 may have a single neural network processor for executing the first sub-network NNI1 of the first neural network chain and executing the first sub-network NNP1 of the second neural network chain. Similarly, the second data processing device 20 comprises separate neural network processors 22I and 22P for executing the second sub-network NNI2 of the second neural network chain and executing the second sub-network NNP2 of the second neural network chain. Alternatively the second data processing device 20 may have a single neural network processor for executing the second sub-network NNI2 of the first neural network chain and executing the second sub-network NNP2 of the second neural network chain.

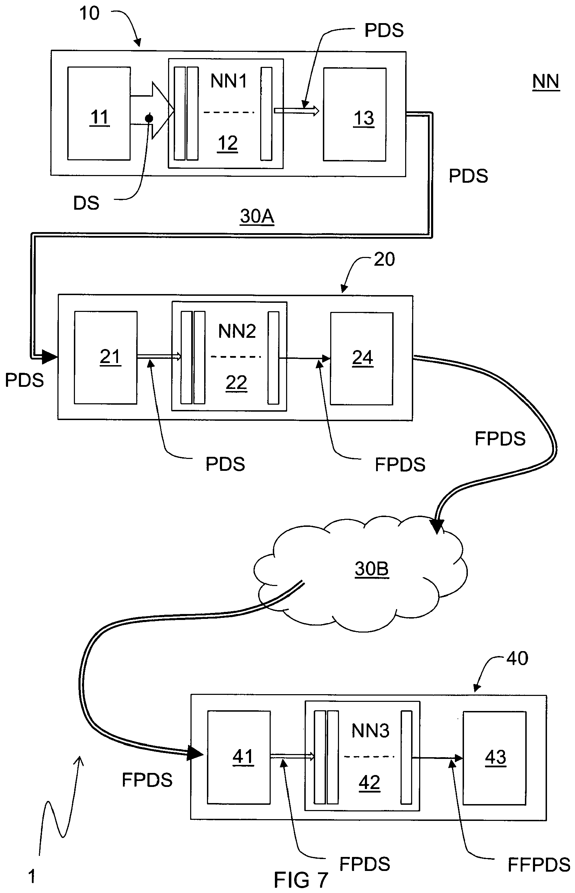

FIG. 7 shows an embodiment of the data processing system 1 comprising a first data processing device 10, a second data processing device 20 and a third data processing device 40. The second data processing device 20 differs from the second data processing device 20 as shown in FIG. 1, in that it comprises a further data communication channel interface 24 to provide the further processed data stream FPDS to a further data communication channel 30B. The third data processing device 40 has a third data communication channel interface 41 and a third neural network processor 42 to execute a third sub-network NN3 of the neural network NN. The third neural network processor 42 is configured to further process the further processed data stream FPDS received through the third data communication channel interface 41 from the further data communication channel 30B and to provide a still further processed data stream FFPDS.

In the embodiment shown, the first data processing device 10 comprises a camera 11, the second data processing device 20 is a local server, and the third data processing device 40 is a remote server. The system of FIG. 7 is for example applicable in a warehouse, wherein a plurality of first data processing devices 10 is coupled by a wideband connection 30A to a local server 20. The wideband connection provides a high data transmission capacity so that the first data processing device 10 only needs to provide a modest data reduction. This can be achieved with a small number of layers of the first sub-network NN1 of the neural network involving low computational costs. The local server provided as the second data processing device 20 has significant computation powers and can therewith significantly compress the data stream PDS to a further processed data stream FPDS in the second sub-network NN2 of the neural network. The further processed data stream FPDS is then transmitted to the third data processing device 40 for further analysis by the third sub-network NN3 of the neural network. In an exemplary embodiment of FIG. 7, the second sub-network NN2 of the neural network is configured to merge a plurality of processed data streams PDS of respective first data processing devices 10 so as to generate a single further processed data stream FPDS.

In another example of a data processing system 1 comprising a third data processing device 40, the third data processing device 40 is a further mobile device.

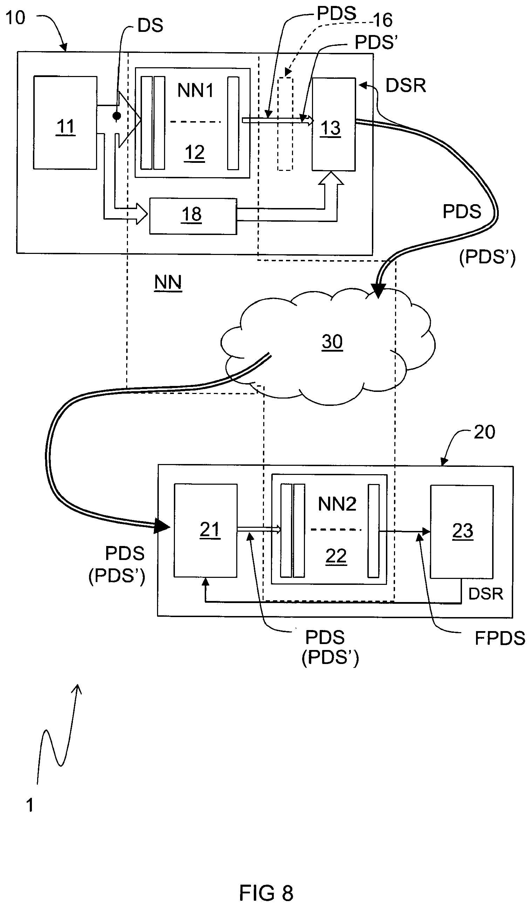

FIG. 8 show a still further embodiment of the data processing system. In the embodiment shown therein, the second data processing device 20 is configured to issue a data stream request signal DSR upon detecting a predetermined event in the further processed data stream. The first data processing device 10 upon receiving the data stream request signal DSR is configured to further transmit data from the data stream DS to the second data processing device 20 in addition to the processed data stream PDS. In the embodiment shown, the first data processing device 10 comprises a data stream buffer 18 to buffer a most recent portion of the data stream DS. The first data processing device 10 upon receiving the data stream request signal DSR is configured to further transmit data from the most recent portion of the data stream DS to the second data processing device in addition to the processed data stream PDS.

It is noted that a component or module may comprise dedicated circuitry or logic that is permanently configured (e.g., as a special-purpose processor) to perform certain operations. A component or a module also may comprise programmable logic or circuitry (e.g., as encompassed within a general-purpose processor or other programmable processor) that is temporarily configured by software to perform certain operations. Accordingly, the term "component" or "module" should be understood to encompass a tangible entity, be that an entity that is physically constructed, permanently configured (e.g., hardwired) or temporarily configured (e.g., programmed) to operate in a certain manner and/or to perform certain operations described herein. Considering embodiments in which components or modules are temporarily configured (e.g., programmed), each of the components or modules need not be configured or instantiated at any one instance in time. For example, where the components or modules comprise a general-purpose processor configured using software, the general-purpose processor may be configured as respective different components or modules at different times. Software may accordingly configure a processor, for example, to constitute a particular component or module at one instance of time and to constitute a different component or module at a different instance of time.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

## Claims

1. A data processing system (1) comprising a first data processing device (10) and a second data processing device (20) coupled by a data communication channel (30), wherein the first data processing device (10) comprises a data stream source (11), a first neural network processor (12) to execute a first sub-network (NN1) of a neural network (NN), and a first data communication channel interface (13), wherein the second data processing device (20) comprises a second data communication channel interface (21) and a second neural network processor (22) to execute a second sub-network (NN2) of the neural network (NN), wherein the first neural network processor (12) is configured to process a data stream (DS) received from the data stream source (11) and to provide a processed data stream (PDS) through the first data communication channel interface (13) to the data communication channel (30) and wherein the second neural network processor (22) is configured to further process the processed data stream (PDS) received through the second data communication channel interface (21) from the data communication channel (30) and to provide a further processed data stream (FPDS).

2. The data processing system (1) according to claim 1, wherein the second sub-network (NN2) is configured to merge a plurality of processed data streams (PDS) of respective first data processing devices (10) so as to generate a single further processed data stream (FPDS).

3. The data processing system according to claim 1 or 2, wherein the first neural network processor of the data processing device is configured to process a data stream (DS) comprising a sequence of image frames, and the first neural network processor computing a stream of feature map frames for a feature map at an output of the first sub-network (NN1), the data processing device being configured to perform a temporal compression by transmitting information about a feature map value of a feature map element of a feature map frame only if an absolute difference between that feature map value and a feature map value of that feature map element in a previous feature map frame exceeds a specified threshold value.

4. The data processing system (1) according to claim 3, wherein said previous feature map frame is the immediately preceding feature map frame.

5. The data processing method according to claim 3, wherein said previous feature map frame is the most recent feature map frame for which information was transmitted for said feature map element.

6. The data processing method according to either of the claims 3-5, wherein the transmitted information specifies the change in value of said feature map element.

7. The data processing system according to one of the preceding claims, wherein:
the first data processing device (10) comprises a video processing device (15) that generates a first stream (DSI) of I-frames and a second stream (DSP) of P frames;
wherein the first stream (DSI) of I-frames is processed by a first neural network comprising a first sub-network (NNI1) executed by the first data processing device (10) and a second sub-network (NNI2) executed by the second data processing device (20) to extract still scene information (FPDSI); and
wherein the second stream (DSP) of P-frames is processed by a second neural network comprising a first sub-network (NNP1) executed by the first data processing device (10) and a second sub-network (NNP2) executed by the second data processing device (20) to extract spatio-temporal modeling information (FPDSP).

8. The data processing system according to one of the preceding claims, wherein the second data processing device (20) comprises a further data communication channel interface (24) to provide the further processed data stream (FPDS) to a further data communication channel (30B) and wherein the data processing system comprises a third data processing device (40) with a third data communication channel interface (41) and a third neural network processor (42) to execute a third sub-network (NN3) of the neural network (NN), and wherein the third neural network processor (42) is configured to further process the further processed data stream (FPDS) received through the third data communication channel interface (41) from the further data communication channel (30B) and to provide a still further processed data stream (FFPDS).

9. The data processing system according to claim 8, wherein the first data processing device (10) is a mobile device, wherein the second data processing device (20) is a local server, and wherein the third data processing device (40) is a remote server.

10. The data processing system according to claim 8, wherein the first data processing device (10) is a client device, wherein the second data processing device (20) is a remote server, and wherein the third data processing device (40) is a client device.

11. The data processing system according to either of the preceding claims, wherein the first sub-network is configured to receive as the data stream successive static images and to render as the processed data stream corresponding successive feature maps of said successive static images, and wherein the second sub-network comprises one or more LSTM layers, said second sub-network being configured to detect information about dynamic features in the processed data stream with successive feature maps and to supply the detected information in the further processed data stream.

12. The data processing system according to one of the preceding claims, wherein the second data processing device is configured to issue a data stream request signal upon detecting a predetermined event in the further processed data stream, and wherein the first data processing device upon receiving the data stream request signal is configured to further transmit data from the data stream to the second data processing device in addition to the processed data stream.

13. The data processing system according to claim 12, wherein the first data processing device comprises a data stream buffer to buffer a most recent portion of the data stream, and wherein the first data processing device upon receiving the data stream request signal is configured to further transmit data from the most recent portion of the data stream in addition to the processed data stream.

14. A data processing method comprising:
Generating a stream of data with a data stream source (11) in a first data processing device (10);
executing a first sub-network (NN1) of a neural network (NN) with a first neural network processor (12) of the first data processing device (10) to process the data stream (DS) from the data stream source (11) and to provide a processed data stream (PDS);
transmitting the processed data stream (PDS) via a data communication channel (30) to a second data processing device (20);
executing a second sub-network (NN2) of the neural network (NN) with a second neural network processor (22) of the second data processing device (10) to further process the processed data stream (PDS) and to provide a further processed data stream (FPDS).

15. The data processing method according to claim 14, comprising the first data processing device transmitting information of a feature map element of a feature map for a frame at an output of the first sub-network (NN1) only if a value of that feature map element changed more than a specified threshold value relative to its value for a previous frame.

16. The data processing method according to claim 15, wherein said previous frame is the immediately preceding frame.

17. The data processing method according to claim 15, wherein said previous frame is the most recent frame for which information was transmitted for said feature map element.

18. The data processing method according to either of the claims 15-17, wherein the transmitted information specifies the change in value of said feature map element.
